# EUROPEAN PATENT APPLICATION

(11) **EP 3 584 001 A1**
(43) Date of publication of application: **25.12.2019**
(21) Application number: 18754504.1
(22) Date of filing: 15.02.2018
(51) Int. Cl.: B01D 69/10, B01D 69/08

(54) **BRAID JOINING METHOD FOR BRAID-REINFORCED HOLLOW FIBER MEMBRANE AND MANUFACTURING METHOD FOR BRAID-REINFORCED POROUS HOLLOW FIBER MEMBRANE**

(30) Priority: 15.02.2017 JP 2017026138
(71) Applicant: NOK Corporation, Tokyo 105-8585 (JP)
(72) Inventor: WATANABE, Kensuke, Kikugawa-shi Shizuoka 437-1507 (JP)
(74) Representative: Beckmann, Claus
(86) International application number: PCT/JP2018/005277
(87) International publication number: WO 2018/151217

(57) **Abstract**

A method for joining braids that are used for a braid-reinforced hollow fiber membrane, produced by the method inserting a core material into the hollow parts of ends of two braids to be joined to connect the two braids, covering the joint part with a heat-shrinkable tube, and shrinking the heat-shrinkable tube by heating at 120 to 160°C, thereby joining the braid ends together, and that can exhibit sufficient joint strength when load is applied during spinning, or when a porous hollow fiber membrane is used as a treatment membrane for water purification treatment, sewage and waste water treatment, etc. A braid-reinforced porous hollow fiber membrane is produced by allowing braids whose ends are joined by the above method to pass through the inner nozzle of a double annular spinning nozzle, applying a membrane-forming dope discharged from the outer nozzle of the double annular spinning nozzle to the outer surfaces of the joined braids passing through the inner nozzle of the double annular spinning nozzle for impregnation, then coagulating the braids in a coagulating liquid, and winding the braids on a bobbin.

## Description

### TECHNICAL FIELD

The present invention relates to a method for joining braids used for braid-reinforced hollow fiber membrane, and a method for producing a braid-reinforced porous hollow fiber membrane. More particularly, the present invention relates to a method for the joining braid used for a braid-reinforced hollow fiber membrane that is effectively used as a treatment membrane for water purification treatment, sewage and waste water treatment, etc., and a method for producing a braid-reinforced porous hollow fiber membrane.

### BACKGROUND ART

Amid recent growing interest in the environment and tightening regulation of water quality in the field of water treatment, such as drainage and water purification, research and development of separation membranes, particularly hollow fiber porous membranes, and their utilization are proceeding, in terms of high separation performance and energy saving.

Compared with conventional coagulation sedimentation filtration systems, in water purification treatment (Removing bacteria) and sewage and waste water treatment (Removing bacteria and turbidity removal) by membrane filtration, operation maintenance and management are easier, and treated water quality is superior. Accordingly, membrane filtration using microfiltration membranes, ultrafiltration membranes, etc. are widely used in the field of water treatment, such as waste water treatment devices and membrane-separation activated sludge process (MBR). For the recent trend of securing water resources, many porous hollow fiber membrane modules having high strength and a large membrane area per unit volume have been used.

For waste water treatment, for example, porous hollow fiber membrane modules having a membrane area per unit volume of about 50 to 100 m² are generally used. Water is supplied to such membrane modules in an amount of several tens to several hundreds of liters per minute. Moreover, in the membrane-separation activated sludge process, elements obtained by bonding both ends of hollow fiber membranes are dipped in activated sludge to increase the biological treatment ability of the activated sludge, or exposed to air for membrane surface cleaning. In these cases, there is a risk that the porous hollow fiber membranes are broken due to the influence of the generated load. Furthermore, for industrial applications, porous hollow fiber membrane modules are generally used for a long period of time (e.g., several years to ten years). Therefore, it is necessary to avoid the breakage of the porous hollow fiber membranes caused by fatigue.

Thus, porous hollow fiber membranes are required to have not only permeability and separation performance, but also kinetic properties for continuous use, without breakage, for a long period of time. Specifically, in sewage and waste water treatment, membranes used in the membrane-separation activated sludge process preferably have a pore size of micron to submicron order. In addition, these membranes are required to tolerate aeration to prevent the adhesion of dirt to the surface.

Resins alone have insufficient strength in many cases. As a method for producing membranes with satisfactory strength, it is possible to increase the membrane thickness; however, this is not preferable because permeability is reduced. To address this problem, there are proposals for hollow fiber membranes in which porous membrane layers are formed on the outer surface of hollow substrates, such as braided or knitted cords (Patent Documents 1 to 6).

Braids used to produce these hollow fiber membranes are generally commercially available in the form of bobbins or reels of 500 m or 1000 m unit. Thus, when spinning is continuously performed, it is necessary to connect these braids of 500 m or 1000 m unit at their ends.

As methods for joining such braids, there are proposals for a method in which two braid end surfaces are bonded together (Patent Document 7), and a method in which core rubber is inserted into the hollow part of a braid so as to be flush with the end surface of the braid, the core rubber is inserted into slightly inside the hollow part of the end surface of another braid, these are bonded together, and the bonded part is covered with one braid end (Patent Document 8). However, these methods have problems that this bonding requires time, and that bonding becomes insufficient due to the influence of the solvent used during spinning. Moreover, when bonding is performed by thermal fusion, the fibrous portions of the braids are alternately thermally melted for bonding; thus, the bonded part may be broken by heat, and there is a problem that reliability is low.

There is also a proposal for a method in which both ends of a core material are inserted into the hollow parts of two braids, and a thread is wound on the outer peripheral surfaces of the braids corresponding to the core material-inserted portions to fix the core material. However, there still remains a problem that this fixing method is not reliable (Patent Document 9).

Further, there is a method in which two braid end surfaces are brought into contact with each other on their outer peripheral surfaces, and the entire ends of the contact part are joined by compressive deformation (Patent Document 10). However, bonding by heat is difficult because the braids themselves are soft. In addition, there is a problem that the bonded part adheres to the heating jig.

### PRIOR ART DOCUMENTS

### PATENT DOCUMENTS

Patent Document 1 : JP-A-52-81076
Patent Document 2 : USP 5,472,607
Patent Document 3 : JP-A-2008-168224
Patent Document 4 : JP-A-5-7746
Patent Document 5 : JP-A-2012-179603
Patent Document 6 : JP-A-2016-10792
Patent Document 7 : JP-B-2,936,092
Patent Document 8 : JP-B-3,849,114
Patent Document 9 : JP-B-4,942,588
Patent Document 10 : JP-B-5,430,405
Patent Document 11 : JP-A-2016-010792

### OUTLINE OF THE INVENTION

### PROBLEM TO BE SOLVED BY THE INVENTION

An object of the present invention is to provide a method for joining braids that are used for a braid-reinforced hollow fiber membrane, and that can exhibit sufficient joint strength when load is applied during spinning, or when a porous hollow fiber membrane is used as a treatment membrane for water purification treatment, sewage and waste water treatment, etc. Another object of the present invention is to provide a method for producing a braid-reinforced porous hollow fiber membrane.

### MEANS FOR SOLVING THE PROBLEM

The first object of the present invention can be achieved by inserting a core material into the hollow parts of ends of two braids to be joined to connect the two braids, covering the joint part with a heat-shrinkable tube, and shrinking the heat-shrinkable tube by heating at 120 to 160°C, thereby joining the braid ends together.

The second object of the present invention can be achieved by a method for producing a braid-reinforced porous hollow fiber membrane, the method comprising allowing braids whose ends are joined by the above method to pass through the inner nozzle of a double annular spinning nozzle, applying a membrane-forming dope discharged from the outer nozzle of the double annular spinning nozzle to the outer surfaces of the joined braids passing through the inner nozzle of the double annular spinning nozzle for impregnation, then coagulating the braids in a coagulating liquid, and winding the braids on a bobbin.

### EFFECT OF THE INVENTION

The braids connected by the method according to the present invention are physically joined firmly, without being influenced by solvents, during spinning like in the case of adhesives. Accordingly, there is an excellent effect that these braids exhibit sufficient joint strength when load is applied during spinning, or when a porous hollow fiber membrane obtained using these braids is used as a treatment membrane for water purification treatment, sewage and waste water treatment, etc.

### BRIEF DESCRIPTION OF DRAWINGS

Fig. 1: A drawing showing, of before joining two braids the braids, a core material, and a heat-shrinkable tube
Fig. 2: A perspective view showing a state in which the core material is inserted into the hollow parts of the two braids

### EMBODIMENTS FOR CARRYING OUT THE INVENTION

Two braids are joined by inserting a core material into the end hollow part of each braid to be joined to connect the braids together, then placing a heat-shrinkable tube so as to cover the joint part, and heating the heat-shrinkable tube at 120 to 160°C, so that the braids are firmly fixed together by the shrunk tube.

Any braids can be used without limitation, as long as they are conventionally used cylindrical braids, regardless of the way of knitting, such as circular knitting or diagonal knitting. For example, cylindrical nets of monofilaments, multifilaments, and spun yarns are used. Specific examples thereof include those having a thickness of about 0.15 to 0.5 mm, a yarn fineness of about 200 to 600 dtex and a yarn density of 16 to 48, and made of organic fiber base materials, such as polyethylene terephthalate, polyphenylene sulfide, polyester, polypropylene, polyethylene, rayon, vinylon, polyamide, polyimide, and aramid; preferably used are those made of polyethylene terephthalate, polyphenylene sulfide, or polyester.

The core material is not particularly limited, as long as it has heat resistance so that it is not thermally deformed at the heating temperature (e.g., about 120 to 160°C) of the heat-shrinkable tube; however, it is perferabe to use materials that have moderate rigidity and flexibility, in addition to heat resistance. Further, the core material preferably has a hollow part. Specifically, rubber materials, such as EPDM, chloroprene rubber, silicone-based rubber, and fluorine-based rubber are used, in terms of quality and price. Moreover, the size of the core material is such that the cross-sectional area in the long axis direction is about 85 to 97% of the cross-sectional area of the hollow part of the braid.

The heat-shrinkable tube is a cylindrical body that is shrunk by heating. Usable examples of the material thereof include commercial products, such as polyolefin resin-based materials, fluororesin-based materials, polyvinyl chloride-based materials, ethylene propylene rubber-based materials, and silicone resin-based materials. Specific examples thereof include Misumi products (polyolefin resin-based materials), SUMITUBE produced by Sumitomo Electric Industries (polyolefin resin-based materials, fluororesin-based materials, and polyvinyl chloride-based materials), HISHITUBE produced by Mitsubishi Resin Corporation (polyvinyl chloride-based materials), NISHITUBE produced by Telmax (ethylene propylene rubber and polyvinyl chloride-based materials), the ST series produced by Shin-Etsu Chemical Co., Ltd. (silicone resin-based materials), and the like, which can be used as they are.

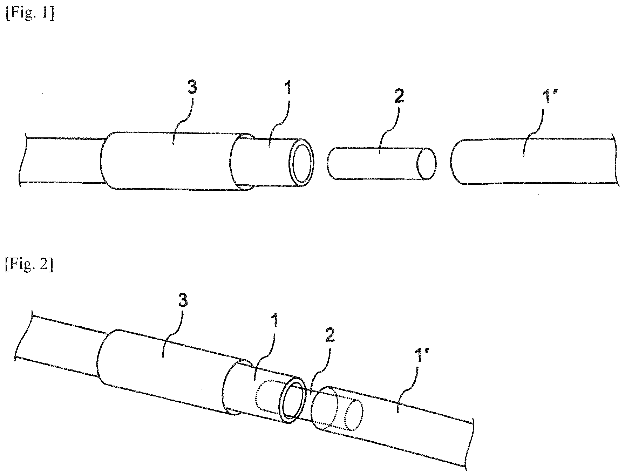

Figs. 1 and 2 are perspective views specifically showing a method for joining two braids. For example, a core material 2 having a length of about 10 to 30 mm is inserted into the end hollow parts of braids 1 and 1' to be joined to connect the braids 1 and 1' together. Then, a heat-shrinkable tube 3 is placed so as to cover the joint part. The heat-shrinkable tube 3 is heated at 120 to 160°C using a heat-shrinkable tube heater or the like. The shrunk tube is pressed and brought into contact with the outer peripheral surfaces of the braids, so that the braids are firmly bonded together.

The braids whose ends are joined together are allowed to pass through, for example, the inner nozzle of a double annular spinning nozzle, and a membrane-forming dope discharged from the outer nozzle of the double annular spinning nozzle is applied to the outer surfaces of the braids passing through the inner nozzle of the double annular spinning nozzle for impregnation. Thereafter, the braids are coagulated in a coagulating liquid and then dried, thereby producing a braid-reinforced porous hollow fiber membrane.

Specifically, the braid-reinforced porous hollow fiber membrane is obtained by a method for producing a braid-reinforced porous hollow fiber membrane, the method comprising allowing braids whose ends are joined together (joined braids) to pass through the inner nozzle of a double annular spinning nozzle, applying a membrane-forming dope discharged from the outer nozzle of the double annular spinning nozzle to the outer surfaces of the joined braids passing through the inner nozzle of the double annular spinning nozzle for impregnation, then coagulating the braids in a coagulating liquid, and winding the braids on a bobbin; wherein in the spinning step, spinning is preferably performed while stretching the joined braids under a tension of 2 to 30 N in the long axis direction of the joined braids from the spinning nozzle to the reel. The obtained braid-reinforced porous hollow fiber membrane has a stable outside diameter shape and a uniform membrane thickness. In addition, no crack starting point is formed in the axial direction of the hollow fiber membrane, so that membrane cracking can be prevented.

A membrane-forming dope for forming a porous hollow fiber membrane is attached to the outer peripheral surfaces of the joined braids. The membrane-forming dope is attached to the outer peripheral surfaces of the joined braids by a method comprising applying the membrane-forming dope discharged from the outer nozzle of a double annular spinning nozzle to the outer surfaces of the joined braids passing through the inner nozzle of the double annular spinning nozzle.

Usable examples of the film-forming resin include polyvinylidene fluoride, polysulfone, polyphenylsulfone, polyetherimide, polyethersulfone, polyamide, preferably polyvinylidene fluoride or polysulfone, and the like, in terms of heat resistance, strength and separation.

The membrane-forming dope is, for example, a solution in which polyvinylidene fluoride is dissolved in a solvent capable of dissolving polyvinylidene fluoride resin so that the concentration thereof is about 16 to 27 wt.%, preferably about 18 to 25 wt.%. If the polyvinylidene fluoride concentration is lower than this range, the membrane pore diameter increases too much. In contrast, if the concentration is higher than this range, it is difficult to dissolve the polyvinylidene fluoride. Examples of the soluble solvent for polyvinylidene fluoride resin include various alcohols or non-protonic polar solvents such as dimethylformamide, diethylformamide, dimethylacetamide, diethylacetamide, dimethyl sulfoxide and N-methyl-2-pyrrolidone, and triethyl phosphate etc.

The joined braids to which the membrane-forming dope for forming a porous hollow fiber membrane is attached are coagulated using a coagulating liquid by a dry-wet spinning method or a wet spinning method, followed by washing and drying, thereby forming a braid-reinforced porous hollow fiber membrane.

In the spinning step of the present invention, spinning is preferably performed while stretching the joined braids under a tension of 2 to 30 N, preferably 4 to 15 N, in the long axis direction of the joined braids from the spinning nozzle to the reel (e.g., a bobbin). The tension is adjusted by, for example, making the winding speed faster than the feeding speed so as to make a difference between the feeding speed and the winding speed. If the tension is less than this range, the obtained braid-reinforced porous hollow fiber membrane has neither a stable outside diameter shape nor a uniform membrane thickness. As a result, a crack starting point is formed in the axial direction of the hollow fiber membrane, so that membrane cracking may occur. By applying such a tension, spinning can be performed at a speed 1 to 50 m/min.

In Patent Document 11, when a braid (cylindrical braid) is allowed to pass through the inner nozzle of a double annular spinning nozzle, a tension of about 4 to 50 N is generally applied to the braid; however, in the present invention, tension is applied to the joined braids not only when they pass through the inner nozzle of the double annular spinning nozzle, but also when they are sent from the spinning nozzle to the bobbin. If tension is applied to the joined braids only when they pass through the inner nozzle of the double annular spinning nozzle, the outside diameter shape is not stable, and membrane cracking may occur, which is not preferable.

### EXAMPLES

The following describes the present invention with reference to Example.

### EXAMPLE

A tubular EPDM core material having an outer diameter of 1.5 mm and a length of 10 mm was inserted into one end parts of two polyethylene terephthalate braids having an outer diameter of 2.1 mm, an inner diameter of 1.7 mm, and a yarn density of 24 so that the two braids were connected. A heat-shrinkable tube (HSTT09-YK1, produced by Misumi) was placed on the outside of the braids so as to cover the connected part. This part was heated at 150°C for 30 seconds to contact bonding the heat-shrinkable tube, thereby joining the two braids.

The joint part of the braids was placed in a tensile tester (EZ Test Compact Tabletop Tester, produced by Shimadzu Corporation). When the joint part was stretched at a speed of 20 mm/min at room temperature, the maximum load was 22 N.

### REFERENCE SIGN LIST

- 1, 1': Braid
- 2: Core material
- 3: Heat-shrinkable tube

## Claims

1. A method for joining braids used for a braid-reinforced hollow fiber membrane comprising inserting a core material into the hollow parts of ends of two braids to be joined to connect the two braids, covering the joint part with a heat-shrinkable tube, and shrinking the heat-shrinkable tube by heating at 120 to 160°C, thereby joining the braid ends together.

2. The method for joining braids used for a braid-reinforced hollow fiber membrane according to claim 1, wherein the core material has a hollow part.

3. The method for joining braids used for a braid-reinforced hollow fiber membrane according to claims 1 or 2, wherein the core material is a rubber.

4. The method for joining braids used for a braid-reinforced hollow fiber membrane according to claim 3, wherein the rubber is EPDM, chloroprene rubber, silicone-based rubber, or fluorine-based rubber.

5. The method for joining braids used for a braid-reinforced hollow fiber membrane according to claim 1, wherein the heat-shrinkable tube material is polyolefin resin-based materials, fluororesin-based materials, polyvinyl chloride-based materials, ethylene propylene rubber-based materials, or silicone resin-based materials.

6. A method for producing a braid-reinforced porous hollow fiber membrane, the method comprising allowing braids whose ends are joined by the method according to claim 1 to pass through the inner nozzle of a double annular spinning nozzle, applying a membrane-forming dope discharged from the outer nozzle of the double annular spinning nozzle to the outer surfaces of the joined braids passing through the inner nozzle of the double annular spinning nozzle for impregnation, then coagulating the braids in a coagulating liquid, and winding the braids on a bobbin.

7. The method for producing a braid-reinforced porous hollow fiber membrane according to claim 6, wherein in the spinning step, spinning is performed while stretching the joined braids under a tension of 2 to 30 N in the long axis direction of the joined braids from the spinning nozzle to the reel.
